# FASCICULE DE BREVET EUROPEEN

(11) **EP 3 367 523 B1**
(45) Date de publication et mention de la délivrance du brevet: **06.03.2019**
(21) Numéro de dépôt: 18153648.3
(22) Date de dépôt: 26.01.2018
(51) Int. Cl.: H02B 3/00, G06K 7/14, H01H 3/26, H01H 33/42, H02B 1/34

(54) **DISPOSITIF DE COMMANDE DES CONTACTS D'UN INTERRUPTEUR ÉLECTRIQUE**
VORRICHTUNG ZUM STEUERN DER KONTAKTE EINES ELEKTRISCHEN UNTERBRECHUNGSSCHALTERS
DEVICE FOR CONTROLLING THE CONTACTS OF AN ELECTRICAL SWITCH

(30) Priorité: 24.02.2017 FR 1751478
(43) Date de publication de la demande: 29.08.2018
(73) Titulaire: Schneider Electric Industries SAS, 92500 Rueil-Malmaison (FR)
(72) Inventeur: ROSSI, Nicolas, 92506 Rueil Malmaison Cedex (FR); TREFFOT, Dominique, 38000 Grenoble (FR)
(74) Mandataire: Dufresne, Thierry

(56) Documents cités:
- WO-A1-2015/157631
- FR-A1- 2 904 468
- US-A1- 2012 055 765

## Description

### Domaine technique de l'invention

La présente invention concerne un dispositif de commande portatif qui est destiné à se raccorder mécaniquement sur un interrupteur électrique pour en actionner les contacts mobiles. Dans le présent document, le terme interrupteur regroupe indifféremment plusieurs types d'appareils électriques tels qu'un interrupteur, un sectionneur, un interrupteur fusible, un recloser, un disjoncteur. L'invention est particulièrement adaptée pour les interrupteurs électriques de moyenne tension et haute tension, c'est-à-dire opérant à une tension supérieure à 1000V.

### Etat de la technique

De façon connue, un tel interrupteur électrique possède des contacts mobiles permettant de commuter chaque phase du réseau d'alimentation électrique. Ces contacts mobiles peuvent se situer dans trois positions distinctes : une première position dite "fermée" dans laquelle ils sont en contact avec des contacts fixes correspondants de l'interrupteur, une deuxième position dite "ouverte" dans laquelle ils sont séparés de ces contacts fixes et une troisième position dite "à la terre" dans laquelle ils sont en contact avec des conducteurs de terre de l'interrupteur. Un but de l'invention est de permettre de façon simple et économique à un opérateur de changer la position des contacts mobiles en toute sécurité.

L'interrupteur comporte habituellement deux axes de rotation permettant d'actionner les contacts mobiles depuis la face avant de l'interrupteur, un premier axe pour le mouvement d'ouverture/fermeture des contacts et un deuxième axe pour le mouvement de mise à la terre des contacts. Pour des raisons de sécurité, ces deux axes sont volontairement distincts de sorte que deux opérations séparées sont nécessaires par exemple pour passer de la position "fermée" à la position contacts "à la terre". De plus, les deux axes de rotation sont habituellement inter-verrouillés, c'est-à-dire que seulement un des deux axes est accessible à un opérateur pour effectuer une action à un instant donné, l'autre étant verrouillé par exemple par obturation.

Il existe déjà différents moyens de commande qui permettent à un opérateur de commander manuellement les opérations d'ouverture/fermeture des contacts mobiles d'un interrupteur par rapport aux contacts fixes, ainsi que les opérations de connexion/ déconnexion des contacts mobiles à la terre. Voir notamment les documents US8395065 ou US8456259.

Dans certains interrupteurs électriques, les moyens de commande sont motorisés et placés à demeure en face avant des interrupteurs de façon à être disponibles à tout moment. Néanmoins, ces opérations étant effectuées relativement peu souvent, maintenir en permanence des moyens de commande motorisés sur chaque interrupteur s'avère donc onéreux en particulier pour des interrupteurs électriques de circuits secondaires.

Dans beaucoup d'autres cas, les moyens de commande ne sont pas motorisés et les opérations d'ouverture/fermeture et de mise à la terre sont effectuées manuellement par un opérateur, par exemple à l'aide d'une manivelle permettant d'effectuer les deux opérations en deux étapes successives. Cependant dans ce cas, la présence permanente de l'opérateur devant l'interrupteur est nécessaire pendant la durée des opérations, ce qui présente des risques potentiels. En effet, l'opération d'ouverture des contacts par exemple peut entraîner l'apparition d'arc internes électriques potentiellement dangereux pour les personnes situées à proximité.

Il existe donc un besoin pour proposer une solution simple et économique, qui soit capable de s'adapter temporairement, de manière aisée et ergonomique, sur des interrupteurs existants non motorisés et capable de faire les deux opérations (connexion/déconnexion et mise à la terre) en toute sécurité pour les opérateurs.

### Exposé de l'invention

Ce but est atteint par un dispositif de commande portatif destiné à commander des contacts d'un interrupteur électrique, le dispositif de commande comprenant un arbre principal d'entraînement, un arbre de maintien, un moteur d'entraînement de l'arbre principal et un microcontrôleur pour piloter le moteur. Le dispositif de commande est conçu pour que selon un premier sens d'introduction, l'arbre principal peut être introduit dans un premier logement de manoeuvre de l'interrupteur pour effectuer un mouvement d'ouverture/fermeture des contacts de l'interrupteur, l'arbre de maintien étant alors logé dans un premier orifice de maintien, et selon un second sens d'introduction, l'arbre principal peut être introduit dans un second logement de manoeuvre de l'interrupteur pour pouvoir effectuer un mouvement de mise à la terre des contacts de l'interrupteur, l'arbre de maintien étant alors logé dans un second orifice de maintien. Le dispositif de commande comporte un détecteur du sens d'introduction du dispositif de commande dans l'interrupteur, le détecteur du sens d'introduction étant relié au microcontrôleur.

Selon une caractéristique, le premier orifice de maintien et le second orifice de maintien sont confondus en un seul orifice commun. Selon une autre caractéristique, premier orifice de maintien correspond au second logement de manoeuvre et le second orifice de maintien correspond au premier logement de manoeuvre.

Selon une caractéristique, le détecteur du sens d'introduction comporte une centrale à inertie. Selon une autre caractéristique, le dispositif de commande comprend un détecteur de position pour vérifier que l'arbre principal est introduit dans un des logements de manoeuvre de l'interrupteur. Selon une autre caractéristique, le dispositif de commande comporte un capteur de position angulaire pour déterminer la position angulaire de l'arbre principal. Selon une autre caractéristique, le dispositif de commande comporte un détecteur de surcharge du courant électrique traversant le moteur. Selon une autre caractéristique, le dispositif de commande comporte un détecteur de sous tension d'alimentation, relié au microcontrôleur, de façon à interdire un mouvement du moteur si la tension d'alimentation est inférieure à un seuil prédéterminé.

Selon une caractéristique, l'arbre principal et l'arbre de maintien ne sont pas strictement parallèles entre eux. Selon une autre caractéristique, le dispositif de commande comporte un doigt d'actionnement décalé par rapport à l'axe principal et mécaniquement lié à l'axe principal. Selon une autre caractéristique, le dispositif de commande comporte une rallonge télescopique sur laquelle est monté l'arbre de maintien.

L'invention décrit également un système de commande de contacts d'un interrupteur électrique, comprenant un dispositif de commande et une console externe portable reliée au dispositif de commande par une liaison sans fil, la console externe comportant des moyens d'identification de l'interrupteur. Selon une caractéristique, les moyens d'identification comportent un lecteur de QR code.

### Description détaillée

D'autres caractéristiques vont apparaître dans la description détaillée qui suit faite en regard des dessins annexés dans lesquels :
- Les figures 1 et 2 représentent une vue d'ensemble d'une cellule comportant un interrupteur et d'un dispositif de commande selon l'invention, le dispositif de commande étant placé à côté de l'interrupteur sur la figure 1 et fixé à l'interrupteur sur la figure 2,
- la figure 3 montre le dispositif de commande plus en détail,
- les figures 4 et 5 présentent différentes solutions de fixation d'un dispositif de commande,
- la figure 6 donne la structure générale des éléments fonctionnels du dispositif de commande.

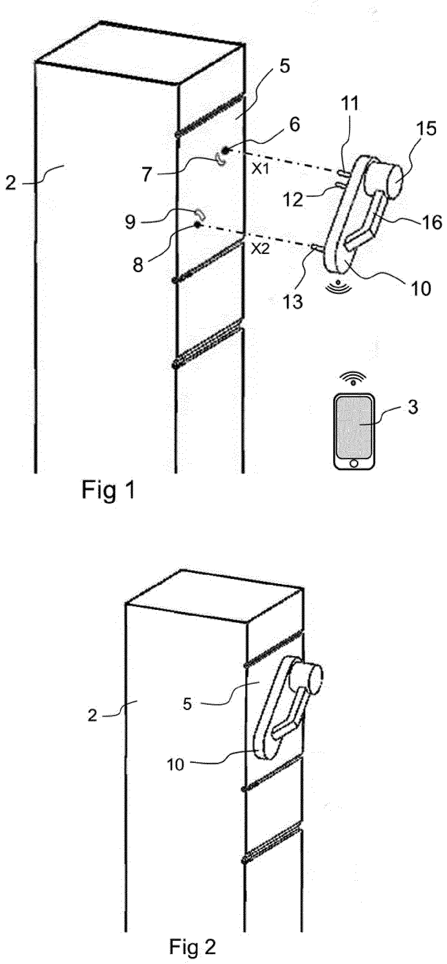

Les figures 1 et 2 montrent, de façon simplifiée, une cellule d'appareillage électrique 2 comportant un interrupteur électrique 5, ainsi qu'un dispositif de commande 10 portatif qui est placé à côté de la face avant de l'interrupteur 5 dans la figure 1, alors que dans la figure 2 ce dispositif de commande 10 est fixé contre la face avant de l'interrupteur 5 pour pouvoir actionner des contacts mobiles de l'interrupteur. Les figures 1 et 2 montrent une cellule d'appareillage électrique 2 ne comprenant qu'un seul interrupteur 5, mais il est clair qu'une cellule d'appareillage électrique 2 peut comporter plusieurs interrupteurs placés les uns à côté des autres.

L'interrupteur 5 comporte un premier logement de manoeuvre 6 autour d'un premier axe X1 de rotation correspondant au mouvement d'ouverture/fermeture de contacts mobiles de l'interrupteur 5, et comporte également un second logement de manoeuvre 8 autour d'un second axe X2 de rotation correspondant au mouvement de mise à la terre des contacts mobiles de l'interrupteur 5.

Les deux logements de manoeuvres 6, 8 sont parallèles, placés sur la face avant de l'interrupteur 5 et, pour des raisons de sécurité, sont volontairement distincts l'un de l'autre de sorte que deux opérations séparées sont nécessaires pour passer de la position "fermée" à la position "ouverte", puis de la position "ouverte" à la position "à la terre". Les deux logements de manoeuvres 6, 8 peuvent recevoir un organe extérieur, tel qu'une manivelle ou le dispositif de commande 10 selon l'invention, afin d'effectuer une rotation du premier axe de rotation X1, respectivement du second axe X2, pour les opérations d'ouverture/fermeture, respectivement de mise à la terre, des contacts. De plus pour des raisons de sécurité, il peut également exister un mécanisme d'obturation qui est conçu pour que, suivant la position des contacts mobiles et la configuration de l'interrupteur 5, un des deux logements 6, 8 reste obturé pour interdire un type de manoeuvre déterminé.

Le dispositif de commande 10 comporte un arbre principal 11 d'entraînement, un arbre de maintien 13, un moteur 15 pour actionner en rotation l'arbre principal 11 et un microcontrôleur 20 qui gère le fonctionnement du dispositif de commande 10 et qui pilote le moteur 15. Avantageusement, le même dispositif 10 est utilisé indifféremment pour les deux opérations, ce qui simplifie la solution. Accessoirement, le dispositif de commande 10 dispose en plus d'une poignée 16 pour être facilement manipulable par un opérateur. Le dispositif de commande est portatif et amovible. Ainsi, il est placé temporairement contre un interrupteur pour effectuer des opérations de commande sur cet interrupteur, puis il est retiré pour pouvoir effectuer ces opérations sur un autre interrupteur. On obtient ainsi une solution économique.

Les dimensions de l'arbre principal 11 et de l'arbre de maintien 13 du dispositif de commande 10 ainsi que leur entraxe sont conçus de sorte que, selon un premier sens d'introduction, l'arbre principal 11 peut être introduit dans le premier logement de manoeuvre 6 de l'interrupteur 5 pour effectuer un mouvement d'ouverture/fermeture des contacts de l'interrupteur 5 selon l'axe de rotation X1, l'arbre de maintien 13 venant alors se loger dans un premier orifice de maintien. Réciproquement, selon un second sens d'introduction, l'arbre principal 11 peut être introduit dans le second logement de manoeuvre 8 de l'interrupteur 5 pour effectuer un mouvement de mise à la terre des contacts de l'interrupteur 5 selon l'axe de rotation X2, l'arbre de maintien 13 venant alors se loger dans un second orifice de maintien.

Comme le premier orifice de maintien et le second orifice de maintien reçoivent l'arbre auxiliaire 13 dans l'un ou l'autre sens d'introduction, ils permettent un blocage angulaire et une fixation du dispositif de commande 10 en position contre l'interrupteur 5. Ils peuvent être situés sur la face avant de l'interrupteur 5, mais pourraient aussi, de façon équivalente, être situés sur la face avant d'un autre interrupteur placé à côté de l'interrupteur 5 dans la cellule 2.

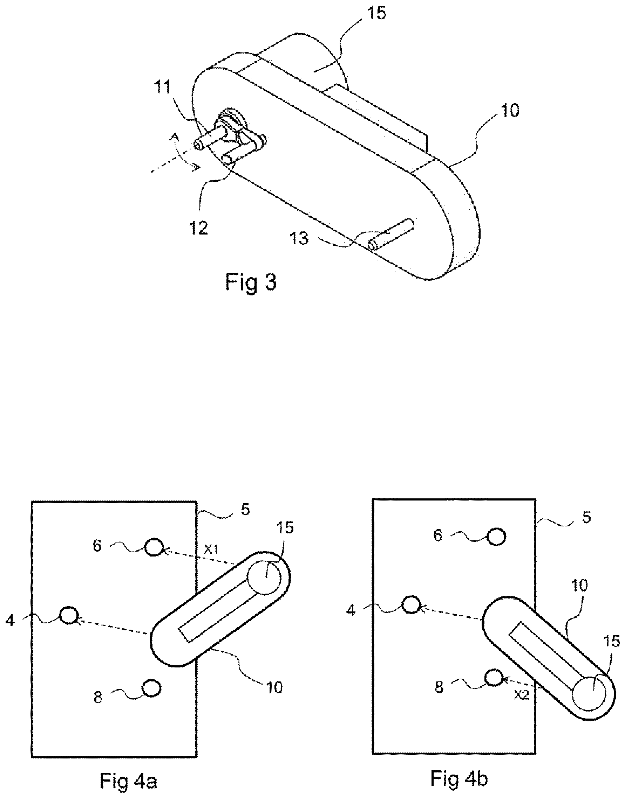

Dans le mode de réalisation des figures 4a et 4b, le premier orifice de maintien et le second orifice de maintien sont un seul et même orifice commun 4, situé par exemple sur la face avant de l'interrupteur 5 et à égale distance des logements 6 et 8. Ainsi, quand le dispositif de commande 10 est introduit selon l'un ou l'autre sens s'introduction (respectivement figure 4a ou figure 4b), l'arbre auxiliaire 13 est toujours logé dans cet orifice commun 4.

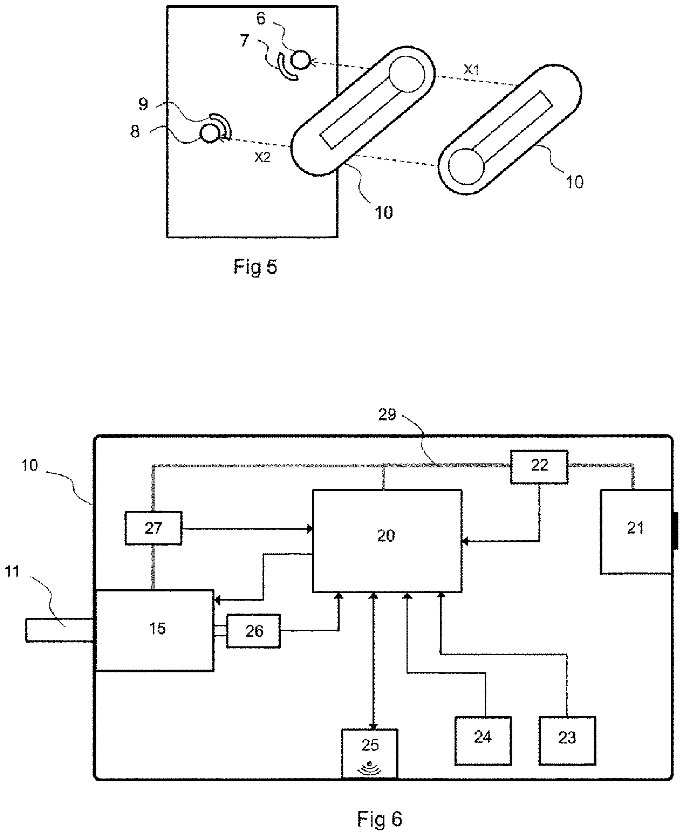

Dans le mode de réalisation des figures 1 et 5, le premier orifice de maintien correspond en fait au second logement de manoeuvre 8 qui reçoit donc l'arbre de maintien 13 dans le premier sens d'introduction. Réciproquement le second orifice de maintien correspond au premier logement de manoeuvre 6 qui reçoit donc l'arbre de maintien 13 dans le second sens d'introduction. Ainsi, aucun orifice complémentaire n'est requis autre que les logements 6, 8, ce qui simplifie la solution. La figure 5 montre ainsi la face avant de l'interrupteur 5 avec le dispositif de commande 10 selon l'un ou l'autre sens d'introduction.

Par ailleurs, le dispositif de commande 10 peut également comporter avantageusement une rallonge télescopique sur laquelle l'arbre de maintien 13 est placé. Ainsi, cette option permet à l'opérateur de régler la longueur de l'entraxe entre l'arbre principal 11 et l'arbre de maintien 13 et donc de faciliter l'utilisation et le réglage du dispositif de commande 10 dans les cas où les orifices de maintien seraient situés à des distances diverses, notamment dans le cas où l'orifice commun 4 des figures 4a et 4b n'était pas situé à égale distance des deux logements 6, 8.

Pour générer une rotation des contacts de l'interrupteur 5 selon les axes X1 ou X2 à partir d'une rotation de l'arbre principal 11, différentes solutions existent. Dans la solution indiquée aux figures 1, 3 et 5, le dispositif de commande 10 comporte un doigt 12 d'actionnement qui est lié mécaniquement et légèrement décalé par rapport à l'arbre principal 11, de sorte qu'il tourne en même temps que l'arbre principal 11 lorsque celui-ci est actionné par le moteur 15. De façon complémentaire, les deux logements de manoeuvres 6, respectivement 8, comportent chacun une ouverture oblongue 7, respectivement 9, qui est aussi légèrement décalée par rapport au logement correspondant de façon à pouvoir accueillir le doigt 12 lorsque l'arbre principal 11 est introduit dans le logement de manoeuvre 6, respectivement 8. La forme des ouvertures oblongues 7, 9 correspond à la course de rotation correspondante du doigt 12. Ainsi, la présence de ce doigt 12 crée un bras de levier qui donne plus de force pour effectuer une rotation des contacts mobiles selon l'axe X1, respectivement X2.

A la place du doigt 12, on peut envisager d'autres solutions telles qu'un ou plusieurs ergots placés sur l'arbre principal 11 et coopérant avec des systèmes complémentaires au niveau des logements 6, 8. On peut aussi envisager que l'arbre principal 11 possède une section transversale qui ne soit pas circulaire mais polygonale, par exemple une section hexagonale, et que les logements de manoeuvres 6, 8 aient une section polygonale complémentaire, ce qui suffirait pour qu'une rotation de l'arbre principal 11 puisse se transmettre correctement en un mouvement des contacts, sans avoir besoin des ouvertures oblongues 7 et 9.

Préférentiellement, le dispositif de commande 10 ne comporte pas de moyens de blocage particuliers pour le maintenir contre la face avant de l'interrupteur 5, ce qui simplifie sa mise en oeuvre. Cette fonction de blocage est réalisée naturellement par le fait que l'arbre de maintien 13 est légèrement décalé par rapport à l'arbre principal 11, soit en orientation (c'est-à-dire que les deux arbres 11 et 13 ne sont pas strictement parallèles entre eux), soit en distance (c'est-à-dire que leur entraxe est légèrement différent de l'entraxe entre les logements 6, 8 et les orifices de maintien correspondants). Ainsi, lorsqu'un opérateur introduit le dispositif de commande 10 dans les logements de manoeuvres 6, 8 selon l'un quelconque des deux sens d'introduction, ce décalage ou ce non parallélisme exerce une force de résistance qui est suffisante pour maintenir en place le dispositif de commande 10 une fois introduit.

La figure 6 donne une représentation schématique des différents éléments fonctionnels du dispositif de commande 10. En premier lieu, le dispositif de commande 10 possède un microcontrôleur 20 qui, à partir d'un certain nombre d'informations détaillées ci-après, est en charge de gérer le dispositif de commande 10 et de piloter le moteur 15 pour actionner l'arbre principal 11.

Pour des raisons de clarté, la figure 6 ne représente pas l'éventuel réducteur qui permet de coupler le moteur 15 avec l'arbre principal 11. De même, la figure 6 ne montre pas le relais de commande du moteur qui est piloté par le microcontrôleur 20.

Le dispositif de commande 10 comporte une interface de communication 25 reliée au microcontrôleur 20 et permettant de communiquer avec une console externe de commande 3. Préférentiellement, l'interface de communication 25 permet de communiquer par un réseau de type sans fil, tel que Bluetooth LE (Low Energy) ou autres. La console externe 3 peut être un smartphone, une tablette, un ordinateur portable, une télécommande ou tout autre appareil équivalent. Elle est utilisée par un opérateur pour piloter et dialoguer à distance avec le dispositif de commande 10 : il peut ainsi envoyer des instructions et recevoir des états ou comptes rendus du dispositif de commande 10, sans être obligé de rester en permanence devant l'interrupteur 5.

Optionnellement, la console externe 3 peut aussi être utilisée pour identifier l'interrupteur que l'opérateur veut commander. Pour cela, elle comporte des moyens d'identification qui permettent à un opérateur de lire un identifiant placé sur l'interrupteur, de telle sorte à récupérer automatiquement les informations utiles sur le type d'interrupteur, son mécanisme d'actionnement des contacts, etc. Cet identifiant est par exemple un QR code placé en face avant de l'interrupteur 5 et les moyens d'identification comprennent un lecteur capable de scanner ce QR code. De même, la console externe 3 peut déterminer la position initiale des contacts de l'interrupteur 5 en visualisant sa face avant. Dans une version basique de l'invention, cette identification du type d'interrupteur et de sa position initiale pourrait aussi se faire par l'opérateur directement par dialogue avec la console externe 3.

Le dispositif de commande 10 comporte une alimentation 21 qui fournit l'énergie électrique 29 nécessaire au fonctionnement du microcontrôleur 20 et au fonctionnement du moteur 15. Cette alimentation peut être par exemple une batterie rechargeable 21 embarquée dans le dispositif de commande 10, mais on pourrait aussi envisager que le dispositif de commande 10 soit alimenté par une alimentation externe raccordée par un cordon électrique. De préférence, le dispositif de commande 10 comporte aussi un détecteur 22 de sous tension d'alimentation de la batterie 21 ou de l'alimentation externe. Ce détecteur de sous-tension 22 mesure la tension d'alimentation du dispositif de commande 10 et envoie l'information au microcontrôleur 20 qui peut alors calculer si cette tension mesurée est en dessous d'un seuil prédéterminé. Ce seuil prédéterminé correspond par exemple au minimum d'énergie nécessaire au moteur pour entraîner correctement le mécanisme de l'interrupteur 5. Avec cette information, le microcontrôleur 20 peut donc décider d'interdire le démarrage du moteur 15, s'il estime que le moteur ne pourra pas recevoir l'énergie 29 suffisante pour accomplir un mouvement complet. Le microcontrôleur 20 signale alors un message d'erreur sur la console externe 3, via l'interface de communication 25.

Selon l'invention, le dispositif de commande 10 comporte un détecteur 24 du sens d'introduction du dispositif de commande 10 dans l'interrupteur 5. Ce détecteur 24 est relié au microcontrôleur 20 et lui fournit les informations nécessaires pour déterminer si l'arbre principal 11 du dispositif de commande 10 est positionné pour être introduit dans le premier logement de manoeuvre 6 ou dans le second logement de manoeuvre 8 de l'interrupteur 5. Ainsi, de façon sûre et sans nécessiter de confirmation par l'opérateur, le dispositif de commande 10 connaît sa propre orientation et sait automatiquement quelle opération sera effectuée (soit ouverture/fermeture des contacts, soit mise à la terre des contacts) lorsqu'un ordre de marche sera envoyé au moteur 15, ce qui permet avantageusement de pouvoir utiliser successivement le même dispositif de commande 10 pour les deux opérations.

Selon un mode de réalisation préféré, le détecteur du sens d'introduction 24 est composé d'une centrale à inertie (appelée aussi Inertial Measurement Unit - IMU) qui comporte habituellement trois gyroscopes et trois accéléromètres. Selon un autre mode de réalisation, le détecteur 24 pourrait juste comprendre trois accéléromètres, ce qui serait suffisant pour connaître l'orientation spatiale du dispositif de commande 10 dans les trois directions x,y,z par rapport au référentiel de l'interrupteur.

En complément du détecteur 24, le dispositif de commande 10 peut comporter optionnellement un détecteur de position 23, par exemple de type microswitch ou détecteur de proximité. Ce détecteur de position 23 informe le microcontrôleur 20 que l'arbre principal 11 du dispositif de commande 10 est complètement introduit dans un des logements 6, 8 de l'interrupteur et donc que le dispositif de commande 10 est correctement maintenu contre l'interrupteur. Dans le cas où le dispositif de commande 10 ne comporterait pas d'autres moyens de verrouillage assurant son maintien contre l'interrupteur, il est en effet préférable de vérifier cette condition avant d'enclencher un mouvement du moteur 15.

Selon un mode de réalisation, le dispositif de commande 10 comporte un capteur 26 de la position angulaire de l'arbre principal 11 et du doigt 12. Ce capteur de position angulaire 26, qui est par exemple un potentiomètre, permet notamment d'informer le microcontrôleur 20 que le mouvement demandé au moteur 15 est terminé de façon à arrêter le moteur 15. Il permet aussi au microcontrôleur 20 de vérifier que l'arbre principal 11 du moteur 15 se trouve dans une position initiale adéquate avant de démarrer une opération et, si ce n'est pas le cas, de commander une légère rotation du moteur 15 pour se trouver dans cette bonne position initiale.

Le dispositif de commande 10 comporte également un détecteur de surcharge 27 qui mesure le courant consommé par le moteur 15 et qui permet au microcontrôleur 20 de détecter une éventuelle surcharge du courant traversant le moteur 15, due par exemple à un blocage, à un dur mécanique ou à une rotation dans le vide. Le microcontrôleur 20 peut alors arrêter le mouvement et signaler un message d'erreur sur la console externe 3.

L'invention concerne également une méthode permettant à un opérateur d'effectuer, à partir d'une console externe 3, les opérations d'ouverture/fermeture et de mise à la terre à l'aide du dispositif de commande 10.

Dans une première étape préliminaire, l'opérateur vient scanner avec la console externe 3 un identifiant (QR code) placé sur l'interrupteur 5, de manière à identifier automatiquement le type d'interrupteur sur lequel il veut agir. De plus, la console 3 peut comporter des moyens de vision pour que l'opérateur demande à la console de détecter soit la position des contacts directement, soit la position d'un indicateur d'état du mécanisme ou de la position des contacts de l'interrupteur 5 de façon à positionner correctement l'arbre principal 11 et le doigt 12 avant introduction. Cette première étape n'est pas obligatoire et, comme indiqué précédemment, peut aussi se faire manuellement ou par dialogue entre l'opérateur et la console 3, si par exemple l'interrupteur ne possède pas d'identifiant visible, .

Dans une deuxième étape, l'opérateur positionne le dispositif de commande 10 devant l'interrupteur 5. Le détecteur 24 du dispositif de commande 10 détecte alors le sens d'introduction choisi par l'opérateur, ce qui permet de savoir si l'arbre principal 11 va être introduit dans le premier logement de manoeuvre 6 pour effectuer une opération d'ouverture/fermeture des contacts ou dans le second logement de manoeuvre 8 pour effectuer une opération de mise à la terre des contacts. A partir de la détection du premier ou du second sens d'introduction, le microcontrôleur 20 est capable de pré-positionner le doigt 12 dans la bonne position initiale (grâce aussi à l'information venant du capteur de position angulaire 26) et d'informer l'opérateur, via la console externe 3, du bon positionnement du dispositif de commande 10 et de l'opération qui va pouvoir être faite. On évite ainsi toute erreur de l'opérateur, car celui-ci est guidé dans l'utilisation du dispositif de commande 10 et le déroulement des différentes étapes.

Dans une troisième étape, l'opérateur introduit le dispositif de commande 10 dans le logement choisi, par exemple dans le premier logement 6. S'il existe un détecteur de position 23, alors le microcontrôleur 20 détecte automatiquement la bonne introduction du dispositif de commande 10. Sinon, l'opérateur vérifie lui-même que le dispositif de commande 10 est bien positionné.

Dans une quatrième étape, l'opérateur va pouvoir commander une opération sur les contacts de l'interrupteur 5 grâce à la console externe 3. Pour cela, il peut au préalable se déplacer à distance de l'interrupteur 5, par exemple dans une pièce voisine, pour éviter toute manoeuvre dangereuse en restant devant l'interrupteur. Ensuite, il envoie un ordre de mouvement éventuellement temporisé via la console externe 3, par exemple ouverture des contacts. Le microcontrôleur 20 reçoit cet ordre, vérifie d'abord qu'il est conforme au sens d'introduction actuel du dispositif de commande 10, puis effectue et contrôle le mouvement grâce notamment au capteur de courant 27 (pour vérifier qu'il n'y a pas de défaut électrique au niveau de moteur) et au détecteur de position 23 (pour vérifier que le mouvement est bien terminé).

Dans une cinquième étape, une fois que l'opérateur a vérifié sur la console externe 3 que le mouvement d'ouverture des contacts était terminé, il peut revenir face à l'interrupteur 5 pour sortir le dispositif de commande 10 du premier logement 6 et pour le repositionner dans l'autre sens d'introduction face au second logement 8 afin de pouvoir faire une autre opération, comme par exemple une mise à la terre des contacts. On revient alors à la deuxième étape.

Selon une variante de réalisation et dans le cas où l'interrupteur 5 comporte un bouton de déclenchement manuel, en particulier dans le cas d'un disjoncteur, le dispositif de commande 10 peut également comporter un module d'actionnement dédié capable d'actionner un tel bouton de déclenchement. Ce module d'actionnement doit être positionné par l'opérateur en face du bouton à déclencher, est alimenté électriquement par le dispositif de commande 10 et est piloté par le microcontrôleur 20, via la console externe 3.

## Revendications

1. Dispositif de commande (10) portatif destiné à commander des contacts d'un interrupteur électrique (5), le dispositif de commande comprenant un arbre principal (11) d'entraînement, un arbre de maintien (13), un moteur (15) d'entraînement de l'arbre principal (11) et un microcontrôleur (20) pour piloter le moteur (15), **caractérisé en ce que** le dispositif de commande (10) est conçu pour que :
- selon un premier sens d'introduction, l'arbre principal (11) peut être introduit dans un premier logement de manoeuvre (6) de l'interrupteur (5) pour effectuer un mouvement d'ouverture/fermeture des contacts de l'interrupteur (5), l'arbre de maintien (13) étant alors logé dans un premier orifice de maintien,
- selon un second sens d'introduction, l'arbre principal (11) peut être introduit dans un second logement de manoeuvre (8) de l'interrupteur (5) pour pouvoir effectuer un mouvement de mise à la terre des contacts de l'interrupteur (5), l'arbre de maintien (13) étant alors logé dans un second orifice de maintien,
et **en ce que** le dispositif de commande (10) comporte un détecteur (24) du sens d'introduction du dispositif de commande (10) dans l'interrupteur (5), le détecteur du sens d'introduction (24) étant relié au microcontrôleur (20).

2. Dispositif de commande selon la revendication 1, **caractérisé en ce que** le premier orifice de maintien et le second orifice de maintien sont confondus en un seul orifice commun (4).

3. Dispositif de commande selon la revendication 1, **caractérisé en ce que** le premier orifice de maintien correspond au second logement de manoeuvre (8) et le second orifice de maintien correspond au premier logement de manoeuvre (6).

4. Dispositif de commande selon la revendication 1, **caractérisé en ce que** le détecteur du sens d'introduction (24) comporte une centrale à inertie.

5. Dispositif de commande selon la revendication 1, **caractérisé en ce qu'**il comporte un détecteur de position (23) pour vérifier que l'arbre principal (11) est introduit dans un des logements de manoeuvre (6, 8) de l'interrupteur (5).

6. Dispositif de commande selon la revendication 1, **caractérisé en ce qu'**il comporte un capteur de position angulaire (26) pour déterminer la position angulaire de l'arbre principal (11).

7. Dispositif de commande selon la revendication 1, **caractérisé en ce qu'**il comporte un détecteur de surcharge (27) du courant électrique traversant le moteur (15).

8. Dispositif de commande selon la revendication 1, **caractérisé en ce qu'**il comporte un détecteur (22) de sous tension d'alimentation, relié au microcontrôleur (20), de façon à interdire un mouvement du moteur (15) si la tension d'alimentation est inférieure à un seuil prédéterminé.

9. Dispositif de commande selon la revendication 1, **caractérisé en ce que** l'arbre principal (11) et l'arbre de maintien (13) ne sont pas strictement parallèles entre eux.

10. Dispositif de commande selon la revendication 1, **caractérisé en ce qu'**il comporte un doigt (12) d'actionnement décalé par rapport à l'axe principal (11) et mécaniquement lié à l'axe principal (11).

11. Dispositif de commande selon la revendication 1, **caractérisé en ce que** qu'il comporte une rallonge télescopique sur laquelle est monté l'arbre de maintien (13).

12. Système de commande de contacts d'un interrupteur électrique, le système comprenant un dispositif de commande (10) selon l'une des revendications précédentes et comprenant une console externe (3) portable reliée au dispositif de commande (10) par une liaison sans fil, la console externe (3) comportant des moyens d'identification de l'interrupteur (5).

13. Système de commande selon la revendication 12, **caractérisé en ce que** les moyens d'identification comportent un lecteur de QR code.

## Patentansprüche

1. Tragbare Steuervorrichtung (10), die dazu bestimmt ist, Kontakte eines elektrischen Schalters (5) zu steuern, wobei die Steuervorrichtung eine Antriebs-Hauptwelle (11), eine Haltewelle (13), einen Antriebsmotor (15) der Hauptwelle (11) und einen Mikrokontroller (20) zum Steuern des Motors (15) enthält, **dadurch gekennzeichnet, dass** die Steuervorrichtung (10) konzipiert ist, damit:
- gemäß einer ersten Einführrichtung die Hauptwelle (11) in eine erste Betätigungsaufnahme (6) des Schalters (5) eingeführt werden kann, um eine Öffnungs-/Schließbewegung der Kontakte des Schalters (5) auszuführen, wobei die Haltewelle (13) dann in einer ersten Halteöffnung untergebracht ist,
- gemäß einer zweiten Einführrichtung die Hauptwelle (11) in eine zweite Betätigungsaufnahme (8) des Schalters (5) eingeführt werden kann, um eine Erdungsbewegung der Kontakte des Schalters (5) ausführen zu können, wobei die Haltewelle (13) dann in einer zweiten Halteöffnung untergebracht ist,
und dass die Steuervorrichtung (10) einen Detektor (24) der Einführrichtung der Steuervorrichtung (10) in den Schalter (5) aufweist, wobei der Detektor der Einführrichtung (24) mit dem Mikrokontroller (20) verbunden ist.

2. Steuervorrichtung nach Anspruch 1, **dadurch gekennzeichnet, dass** die erste Halteöffnung und die zweite Halteöffnung in einer einzigen gemeinsamen Öffnung (4) zusammenfallen.

3. Steuervorrichtung nach Anspruch 1, **dadurch gekennzeichnet, dass** die erste Halteöffnung der zweiten Betätigungsaufnahme (8) und die zweite Halteöffnung der ersten Betätigungsaufnahme (6) entspricht.

4. Steuervorrichtung nach Anspruch 1, **dadurch gekennzeichnet, dass** der Detektor der Einführrichtung (24) eine Trägheitszentrale aufweist.

5. Steuervorrichtung nach Anspruch 1, **dadurch gekennzeichnet, dass** sie einen Positionsdetektor (23) aufweist, um zu überprüfen, dass die Hauptwelle (11) in eine der Betätigungsaufnahmen (6, 8) des Schalters (5) eingeführt ist.

6. Steuervorrichtung nach Anspruch 1, **dadurch gekennzeichnet, dass** sie einen Winkelpositionssensor (26) aufweist, um die Winkelposition der Hauptwelle (11) zu bestimmen.

7. Steuervorrichtung nach Anspruch 1, **dadurch gekennzeichnet, dass** sie einen Überlastdetektor (27) des durch den Motor (15) fließenden elektrischen Stroms aufweist.

8. Steuervorrichtung nach Anspruch 1, **dadurch gekennzeichnet, dass** sie einen Detektor (22) einer Versorgungs-Unterspannung aufweist, der mit dem Mikrokontroller (20) verbunden ist, um eine Bewegung des Motors (15) zu verhindern, wenn die Versorgungsspannung unter einer vorbestimmten Schwelle liegt.

9. Steuervorrichtung nach Anspruch 1, **dadurch gekennzeichnet, dass** die Hauptwelle (11) und die Haltewelle (13) nicht strikt parallel zueinander sind.

10. Steuervorrichtung nach Anspruch 1, **dadurch gekennzeichnet, dass** sie einen Betätigungsstift (12) aufweist, der in Bezug auf die Hauptachse (11) versetzt und mechanisch mit der Hauptachse (11) verbunden ist.

11. Steuervorrichtung nach Anspruch 1, **dadurch gekennzeichnet, dass** sie eine Teleskopverlängerung aufweist, auf die die Haltewelle (13) montiert ist.

12. Steuersystem von Kontakten eines elektrischen Schalters, wobei das System eine Steuervorrichtung (10) nach einem der vorhergehenden Ansprüche enthält und eine tragbare externe Konsole (3) enthält, die durch eine drahtlose Verbindung mit der Steuervorrichtung (10) verbunden ist, wobei die externe Konsole (3) Identifikationseinrichtungen des Schalters (5) aufweist.

13. Steuersystem nach Anspruch 12, **dadurch gekennzeichnet, dass** die Identifikationseinrichtungen ein Lesegerät für einen QR-Code aufweisen.

## Claims

1. Portable control device (10) designed to control contacts of an electrical switch (5), the control device comprising a main drive shaft (11), a holding shaft (13), a motor (15) for driving the main shaft (11) and a microcontroller (20) for controlling the motor (15), **characterized in that** the control device (10) is designed such that:
- in a first insertion direction, the main shaft (11) is able to be inserted into a first manoeuvring recess (6) of the switch (5) in order to perform a movement for opening/closing the contacts of the switch (5), the holding shaft (13) then being housed in a first holding orifice,
- in a second insertion direction, the main shaft (11) is able to be inserted into a second manoeuvring recess (8) of the switch (5) in order to be able to perform a movement for grounding the contacts of the switch (5), the holding shaft (13) then being housed in a second holding orifice,
and **in that** the control device (10) includes a detector (24) of the insertion direction of the control device (10) into the switch (5), the detector (24) of the insertion direction being linked to the microcontroller (20).

2. Control device according to Claim 1, **characterized in that** the first holding orifice and the second holding orifice are combined into a single shared orifice (4).

3. Control device according to Claim 1, **characterized in that** the first holding orifice corresponds to the second manoeuvring recess (8) and the second holding orifice corresponds to the first manoeuvring recess (6).

4. Control device according to Claim 1, **characterized in that** the detector (24) of the insertion direction includes an inertial measurement unit.

5. Control device according to Claim 1, **characterized in that** it includes a position detector (23) for verifying that the main shaft (11) has been inserted into one of the first and second manoeuvring recesses (6, 8) of the switch (5).

6. Control device according to Claim 1, **characterized in that** it includes an angular position sensor (26) for determining the angular position of the main shaft (11).

7. Control device according to Claim 1, **characterized in that** it includes a detector (27) for detecting an overload of the electric current flowing through the motor (15).

8. Control device according to Claim 1, **characterized in that** it includes a supply undervoltage detector (22), linked to the microcontroller (20), so as to prohibit movement of the motor (15) if the supply voltage is below a predetermined threshold.

9. Control device according to Claim 1, **characterized in that** the main shaft (11) and the holding shaft (13) are not strictly parallel with one another.

10. Control device according to Claim 1, **characterized in that** it includes an actuating finger (12) that is offset with respect to the main axis (11) and mechanically linked to the main axis (11).

11. Control device according to Claim 1, **characterized in that** it includes a telescopic extension on which the holding shaft (13) is mounted.

12. System for controlling contacts of an electrical switch, the system comprising a control device (10) according to one of the preceding claims and comprising a portable external console (3) linked to the control device (10) through a wireless link, the external console (3) including means for identifying the switch (5).

13. Control system according to Claim 12, **characterized in that** the identification means include a QR code reader.
